# EUROPEAN PATENT APPLICATION

(11) **EP 4 625 134 A1**
(43) Date of publication of application: **01.10.2025**
(21) Application number: 24182798.9
(22) Date of filing: 18.06.2024
(51) Int. Cl.: G06F 3/12, H04N 1/00

(54) **INFORMATION PROCESSING SYSTEM AND INFORMATION APPARATUS SYSTEM**

(30) Priority: 26.03.2024 JP 2024050429
(71) Applicant: FUJIFILM Business Innovation Corp., Minato-ku Tokyo (JP)
(72) Inventor: TAKAHASHI, Sasuke, Yokohama-shi, Kanagawa (JP)
(74) Representative: Kurig, Thomas

(57) **Abstract**

An information processing system includes one or plural processors configured to: acquire setting information including plural setting items and a setting order of the plural setting items; and replicate setting values in order from the setting item having a lowest setting order.

## Description

### BACKGROUND OF THE INVENTION

### (i) Field of the Invention

The present invention relates to an information processing system and an information apparatus system.

### (ii) Description of Related Art

JP2013-166270A discloses techniques related to a control device, an electronic apparatus, a control method, and a program. In the related art, a controller comprises a key operation analysis unit, a log control unit, an acquisition unit, and a restoration unit. The key operation analysis unit generates setting information of a printer apparatus according to an operation input. The log control unit performs control to store operation logs indicating the recording of the operation input in an SD card. The acquisition unit acquires the operation logs from the SD card. The restoration unit restores the setting information from setting logs indicating the recording of the operation input in a case where the setting information is generated among the operation logs acquired by the acquisition unit.

JP2021-196666A discloses techniques related to an information processing apparatus, an information processing system, and an information processing program. In the related art, a processor acquires setting information that is information indicating settings of a replication source apparatus and log information that is information indicating an execution result of a process of the replication source apparatus, extracts error information that is information indicating an error related to the settings from the log information, and controls replication of the setting information according to the extracted error information.

### SUMMARY OF THE INVENTION

The present invention prevents a replicated setting value from being an unintended setting value in a case where the setting value is replicated from one side to the other side.

According to a first aspect of the present disclosure, there is provided an information processing system including one or a plurality of processors configured to: acquire setting information including a plurality of setting items and a setting order of the plurality of setting items; and replicate setting values in order from a setting item having a lowest setting order.

According to a second aspect of the present disclosure, in the information processing system according to the first aspect, the processor may be configured not to replicate the setting value of the setting item of which an initial value of the setting order is a predetermined value.

According to a third aspect of the present disclosure, in the information processing system according to the first or second aspect, the processor may be configured to, in a case where a setting value of one of the setting items is set, set a setting value of another of the setting items in operative association with the setting of the setting value of the one setting item.

According to a fourth aspect of the present disclosure, in the information processing system according to any one of the first to third aspects, a setting value of one of the setting items may have a prohibition with respect to a setting value of another of the setting items.

According to a fifth aspect of the present disclosure, in the information processing system according to any one of the first to fourth aspects, the processor may be configured not to replicate a setting value of the setting item whose setting order has an initial value.

According to a sixth aspect of the present disclosure, there is provided an information processing system including one or a plurality of processors configured to: record a setting order in a case where a setting value of a setting item is set; and generate setting information having setting values of a plurality of setting items and a setting order in which the setting values of the plurality of setting items are set last.

According to a seventh aspect of the present disclosure, in the information processing system according to the sixth aspect, the processor may be configured not to record the setting order of a predetermined setting item even in a case where a setting value of the predetermined setting item is set.

According to an eighth aspect of the present disclosure, in the information processing system according to the sixth or seventh aspect, the processor may be configured to: in a case where a setting value of one of the setting items is set, set a setting value of another of the setting items in operative association with the setting of the setting value of the one setting item and record the setting order.

According to a ninth aspect of the present disclosure, in the information processing system according to the sixth to eighth aspects, a setting value of one of the setting items may have a prohibition with respect to a setting value of another of the setting items.

According to a tenth aspect of the present disclosure, there is provided an information apparatus system that replicates setting values of a plurality of setting items of a replication source apparatus to setting values of a plurality of setting items of a replication destination apparatus. A processor of the replication source apparatus is configured to: record a setting order in a case where the setting values of the setting items are set; and generate setting information having the setting values of the plurality of setting items and a setting order in which the setting values of the plurality of setting items are set last. A processor of the replication destination apparatus is configured to: acquire the setting information; and replicate the setting values in order from a setting item having a lowest setting order.

According to an eleventh aspect of the present disclosure, in the information apparatus system according to the tenth aspect, the processor of the replication source apparatus may be configured not to record the setting order of the setting item of which an initial value of the setting order is a predetermined value even in a case where the setting value of the setting item is set.

According to a twelfth aspect of the present disclosure, in the information apparatus system according to the eleventh aspect, the processor of the replication destination apparatus may be configured not to replicate a setting value of the setting item of which an initial value of the setting order is the predetermined value.

According to a thirteenth aspect of the present disclosure, in the information apparatus system according to any one of the tenth to twelfth aspects, the processor of the replication source apparatus may be configured not to replicate the setting value of the setting item whose setting order has an initial value in the setting information.

According to a fourteenth aspect of the present disclosure, in the information apparatus system according to any one of the tenth to thirteenth aspects, the processor of the replication source apparatus may be configured to: in a case where a setting value of one of the setting items is set, set a setting value of another of the setting items in operative association with the setting of the setting value of the one setting item and record the setting order.

According to a fifteenth aspect of the present disclosure, in the information apparatus system according to the fourteenth aspect, the processor of the replication destination apparatus may be configured to: in a case where the setting value of the one setting item that is identical to a setting value of the setting item in the replication source apparatus is set, set the setting value of the another setting item that is identical to the setting value of the setting item in the replication source apparatus in operative association with the setting of the setting value of the one setting item.

According to the information processing system of the first aspect, in a case where a setting value is replicated from one side to the other side, it is possible to prevent the replicated setting value from being an unintended setting value.

According to the information processing system of the second aspect, it is possible to provide the setting item whose setting value is not replicated.

According to the information processing system of the third aspect, a setting error is reduced as compared to a case where there are no items that are set in operative association with each other.

According to the information processing system of the fourth aspect, the setting error is reduced as compared to a case where there is no prohibition.

According to the information processing system of the fifth aspect, it is possible to provide the setting item whose setting value is not replicated.

According to the information processing system of the sixth aspect, in a case where a setting value is replicated from one side to the other side, it is possible to prevent the replicated setting value from being an unintended setting value.

According to the information processing system of the seventh aspect, it is possible to provide the setting item whose setting order is not recorded.

According to the information processing system of the eighth aspect, in a case where the setting values of the setting items are set in operative association with each other, the frequency of the setting values of the setting items being unintended setting values in a case where the setting values of the setting items are replicated is reduced as compared to a case where the setting order is not recorded.

According to the information processing system of the ninth aspect, the setting error is reduced as compared to a case where there is no prohibition.

According to the information apparatus system of the tenth aspect, in a case where a setting value is replicated from one side to the other side, it is possible to prevent the replicated setting value from being an unintended setting value.

According to the information apparatus system of the eleventh aspect, it is possible to provide the setting item whose setting value is not recorded.

According to the information apparatus system of the twelfth aspect, it is possible to provide the setting item whose setting value is not replicated.

According to the information apparatus system of the thirteenth aspect, it is possible to provide the setting item whose setting value is not replicated.

According to the information apparatus system of the fourteenth aspect, in a case where the setting values of the setting items are set in operative association with each other, the frequency of the setting values of the setting items being unintended setting values in a case where the setting values of the setting items are replicated is reduced as compared to a case where the setting order is not recorded.

According to the information apparatus system of the fifteenth aspect, the frequency of the setting value of the setting item being an unintended setting value is reduced as compared to a case where the setting item to be operatively associated is not matched with that in the replication source apparatus.

### BRIEF DESCRIPTION OF THE DRAWINGS

Exemplary embodiment(s) of the present invention will be described in detail based on the following figures, wherein:
Fig. 1 is a diagram illustrating a schematic configuration of an information apparatus system;
Fig. 2 is a block diagram illustrating a hardware configuration of a replication source apparatus and a replication destination apparatus;
Fig. 3 is a block diagram illustrating control units of the replication source apparatus and the replication destination apparatus;
Fig. 4 is a diagram illustrating setting information of the replication source apparatus in an initial state;
Fig. 5 is a diagram illustrating a history in which a setting value of each setting item in a replication source apparatus was set;
Fig. 6 is a diagram illustrating the setting information replicated from the replication source apparatus;
Fig. 7 is a flowchart illustrating a process of recording a setting order of each setting item in the replication source apparatus;
Fig. 8 is a diagram illustrating setting of the setting value of each setting item in the replication destination apparatus;
Fig. 9 is a flowchart illustrating a process of setting the setting value of each setting item in the replication destination apparatus; and
Fig. 10 is a diagram illustrating setting of a setting value of each setting item in a replication destination apparatus in a comparative example.

### DETAILED DESCRIPTION OF THE INVENTION

### <Exemplary Embodiment>

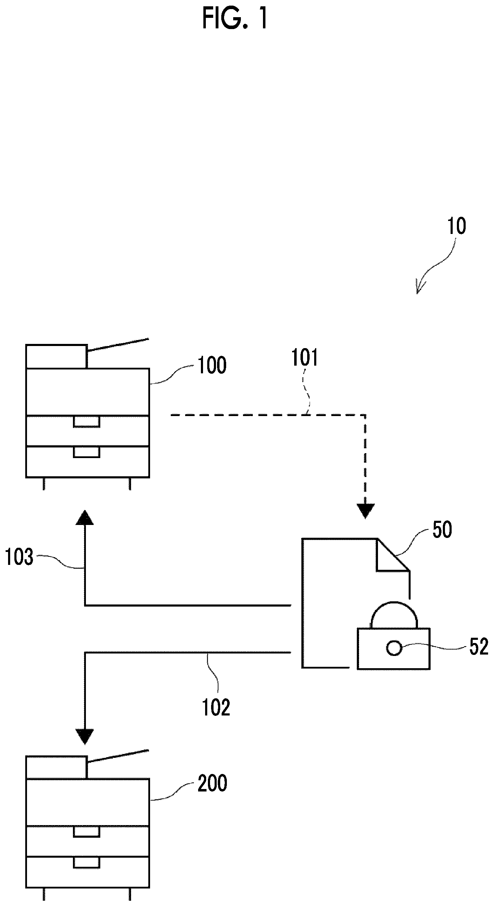

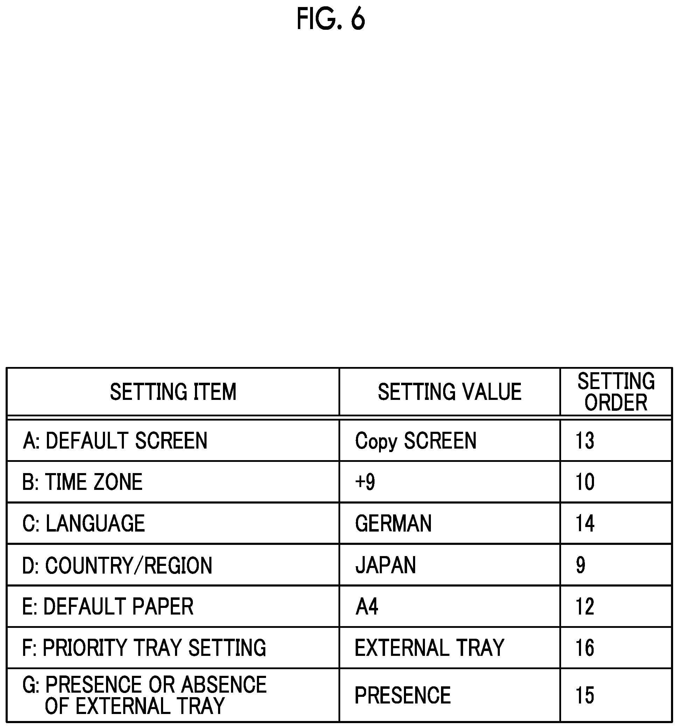

Fig. 1 is a diagram illustrating a schematic configuration of an information apparatus system 10 according to the present exemplary embodiment. The information apparatus system 10 is configured to comprise an image forming apparatus 100 (hereinafter, referred to as a "replication source apparatus 100") as a replication source that creates a setting file 52 in which setting information (see Fig. 6) of the replication source apparatus 100 has been recorded and an image forming apparatus 200 (hereinafter, referred to as a "replication destination apparatus 200") as a replication destination that acquires the setting information (see Fig. 6) from the setting file 52 and sets the setting information in the replication destination apparatus 200. The setting information according to the present exemplary embodiment includes setting values of a plurality of setting items and a setting order of the setting items.

In the present exemplary embodiment, the setting file 52 is transmitted and received via a memory card 50 such as a USB memory or an SD card. Specifically, the setting file 52 in which the setting information of the replication source apparatus 100 has been recorded is written to the memory card 50. The memory card 50 is taken out from the replication source apparatus 100 and is connected to the replication destination apparatus 200, and the setting file 52 is read into the replication destination apparatus 200 to be transmitted and received.

### [Hardware Configuration]

An example of an electrical hardware configuration of the replication source apparatus 100 and the replication destination apparatus 200 will be described. In the present exemplary embodiment, since the hardware configuration of the replication source apparatus 100 is identical to the hardware configuration of the replication destination apparatus 200, the hardware configurations will be described without distinction.

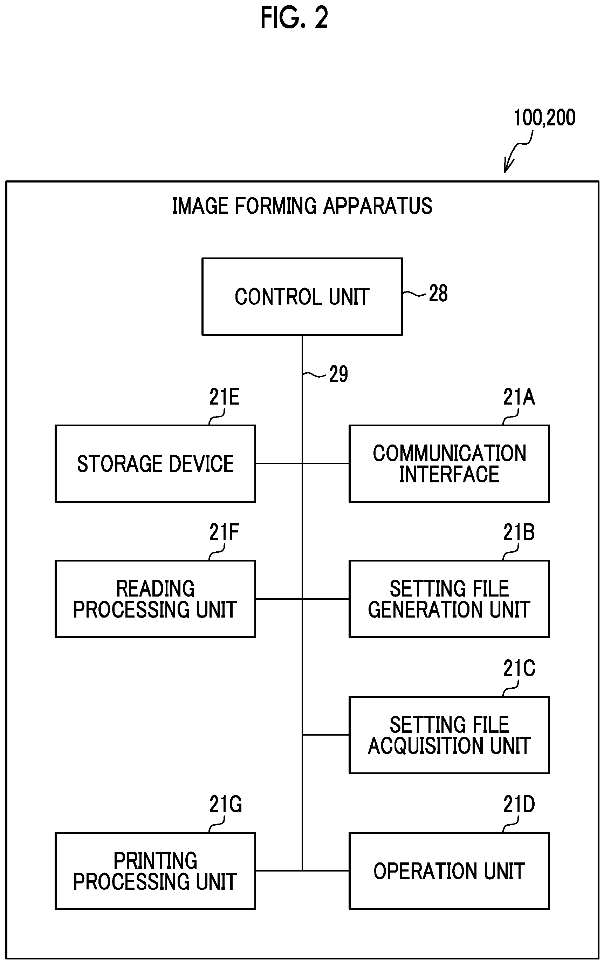

As illustrated in Fig. 2, the replication source apparatus 100 and the replication destination apparatus 200 are configured to include a communication interface 21A, a setting file generation unit 21B, a setting file acquisition unit 21C, an operation unit 21D, a storage device 21E, a reading processing unit 21F, a printing processing unit 21G, and a control unit 28 that are electrically connected by a system bus 29.

The communication interface 21A is an interface for connecting the replication source apparatus 100 and the replication destination apparatus 200 to a communication line.

The setting file generation unit 21B performs a process related to the creation of the setting file 52 (see Fig. 1) in which the setting information has been recorded. The setting file acquisition unit 21C performs a process related to the acquisition of the setting information from the setting file 52 (see Fig. 1).

The operation unit 21D performs a process related to the operation of an operation screen. In addition, a user performs, for example, the setting of the setting values of a plurality of setting items on the operation screen.

The storage device 21E is configured by a hard disk drive (HDD), a solid state drive (SSD), or the like and stores various types of data, a program, such as a remote operation mode, and the like. The reading processing unit 21F performs a process related to a reading function of the replication source apparatus 100 and the replication destination apparatus 200. The printing processing unit 21G performs a process related to printing and copying functions of the replication source apparatus 100 and the replication destination apparatus 200.

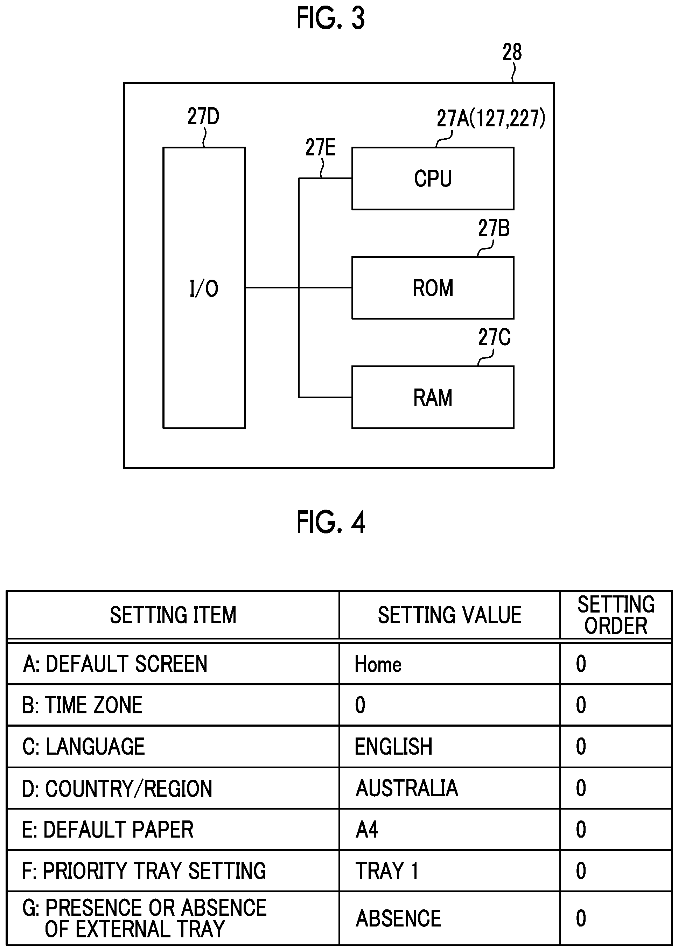

As illustrated in Fig. 3, the control unit 28 comprises a central processing unit (CPU) 27A that executes various processes in the replication source apparatus 100 and the replication destination apparatus 200, a read only memory (ROM) 27B that stores various programs, a random access memory (RAM) 27C that is used as a temporary work area of the CPU 27A, and an input/output interface (I/O) 27D. The CPU 27A, the ROM 27B, the RAM 27C, and the I/O 27D are connected via a bus 27E. The communication interface 21A, the setting file generation unit 21B, the setting file acquisition unit 21C, the operation unit 21D, the storage device 21E, the reading processing unit 21F, and the printing processing unit 21G illustrated in Fig. 2 are electrically connected to the I/O 27D.

The CPU 27A as an example of the processor illustrated in Fig. 3 is a central processing unit and controls the overall operation of the replication source apparatus 100 and the replication destination apparatus 200. The CPU 27A executes various programs including the remote operation mode or controls each unit. That is, the CPU 27A reads out the program from the ROM 27B or the storage device 21E (see Fig. 2) and executes the program using the RAM 27C as the work area.

Here, in a case where it is necessary to distinguish between the CPU 27A of the replication source apparatus 100 and the CPU 27A of the replication destination apparatus 200 in description, the CPU 27A of the replication source apparatus 100 is referred to as a "CPU 127", and the CPU 27A of the replication destination apparatus 200 is referred to as a "CPU 227".

### [Creation of Setting File]

Next, the creation of the setting file 52 in the replication source apparatus 100 will be described.

Fig. 4 illustrates setting information indicating a plurality of setting items, setting values of the setting items, and a setting order in an initial state of the replication source apparatus 100. Specifically, the setting value of a default screen of a setting item A is "Home", the setting value of a time zone of a setting item B is "0", the setting value of a language of a setting item C is "English", the setting value of a country/region of a setting item D is "Australia", the setting value of default paper of a setting item E is "A4", the setting value of a priority tray setting of a setting item F is "Tray 1", and the setting value of the presence or absence of an external tray of a setting item G is "Absence". In addition, since the replication source apparatus is in the initial state, "0" is input to all of the setting orders. The initial state is a state at the time of factory shipment, and the initial value is a value that is set at the time of factory shipment.

Here, in a case where the setting value of one setting item is set, the setting value of another setting item may be automatically set in operative association with the setting value of the one setting item among the setting items of the replication source apparatus 100. In the present exemplary embodiment, in a case where the country/region of the setting item D is set, the time zone of the setting item B, the language of the setting item C, and the default paper of the setting item E are automatically set in operative association with the setting of the country/region. In addition, this process is referred to as an "operative association process".

Further, there is a prohibition in which the setting value of one setting item is not capable of being set unless the setting value of another setting item is a preset setting value among the setting items of the replication source apparatus 100. In the present exemplary embodiment, there is a prohibition in which the setting value of the priority tray setting of the setting item F is not capable of being set to "External tray" unless the setting value of the presence or absence of the external tray of the setting item G is "Presence". Furthermore, this process is referred to as a "prohibition process". In addition, in a case where the setting item is not capable of being set to a desired setting value by the prohibition process, the setting value is not set, and a message indicating that the setting value is not capable of being set because there is a prohibition, a message indicating that the setting has failed, or the like is displayed on the operation screen.

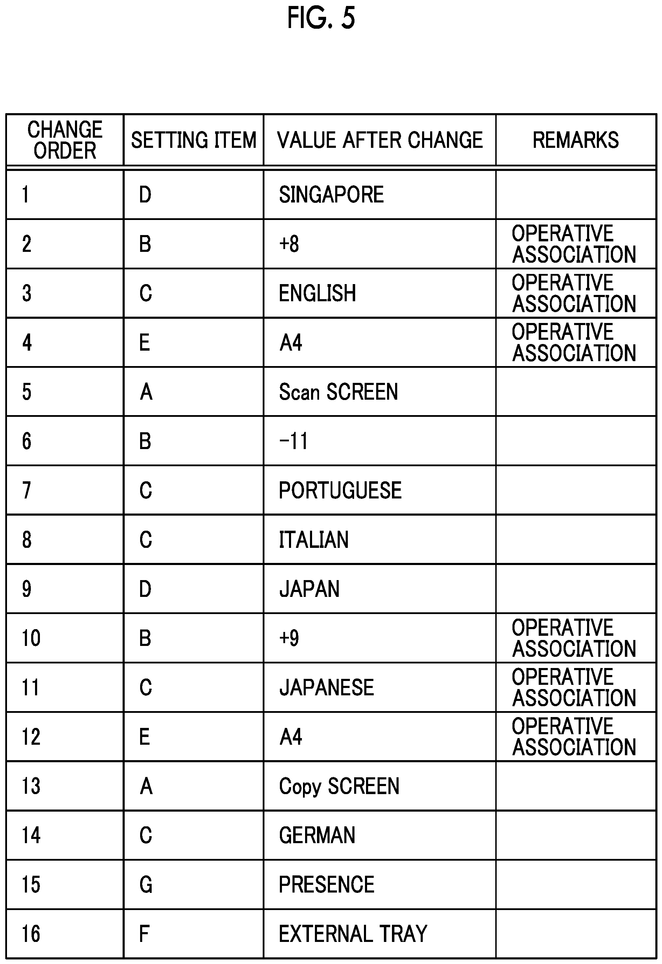

Fig. 5 illustrates a history in which the user operated the operation screen to set the setting items. As illustrated in Fig. 5, the setting order is recorded from the initial state of the setting item whose setting value has been set.

In a case where the setting value of the country/region of the setting item D is set to "Singapore" at the beginning, the setting order of the setting item D is changed to "1" and recorded.

As described above, in a case where the setting value of the country/region of the setting item D is set to "Singapore", the time zone of the setting item B, the language of the setting item C, and the default paper of the setting item E are automatically set in operative association with the setting of the country/region by the operative association process. Specifically, the setting value of the time zone of the setting item B is set to "+8", and the setting order of the setting item B is changed to "2" and recorded. Then, the setting value of the language of the setting item C is set to "English", and the setting order of the setting item C is changed to "3" and recorded. Then, the setting value of the default paper of the setting item E is set to "A4", and the setting order of the setting item E is changed to "4" and recorded. In addition, the setting value of the setting item C and the setting value of the setting item E are not actually changed from the initial values, but the setting order of the setting items is recorded.

Then, the setting value of the default screen of the setting item A is set to "Scan screen", and the setting order of the setting item A is changed to "5" and recorded. Then, the setting value of the time zone of the setting item B is set to "-11", and the setting order of the setting item B is changed to "6" and recorded. Then, the setting value of the language of the setting item C is set to "Portuguese", and the setting order of the setting item C is changed to "7" and recorded. Then, the setting value of the language of the setting item C is set to "Italian", and the setting order of the setting item C is changed to "8" and recorded.

Then, the setting value of the country/region of the setting item D is set to "Japan", and the setting order of the setting item D is changed to "9" and recorded. As described above, in a case where the setting item D is set, the setting item B, the setting item C, and the setting item E are automatically set in operative association with the setting of the setting item D. Specifically, the setting value of the time zone of the setting item B is set to "+9", and the setting order is changed to "10" and is recorded. The setting value of the language of the setting item C is set to "Japanese", and the setting order is changed to "10" and recorded. The setting value of the default paper of the setting item E is set to "A4", and the setting order is changed to "12" and recorded.

Then, the setting value of the default screen of the setting item Ais set to "Copy screen", and the setting order is changed to "13" and recorded. Then, the setting value of the language of the setting item C is set to "German", and the setting order is changed to "14" and recorded.

Then, the setting value of the presence or absence of the external tray of the setting item G is set to "Presence", and the setting order is changed to "15" and recorded. Then, the setting value of the priority tray setting of the setting item F is changed to "External tray", and the setting order is changed to "16" and recorded.

As described above, there is a prohibition on the setting of the setting value of the setting item F to "External tray", and the setting value of the setting item F is not capable of being set unless the setting value of the setting item G is set to "Presence". However, since the setting value of the setting item G is set to "Presence" in a case where the setting order is "15", the setting value of the setting item F is set to "External tray".

Further, as described above, in a case where the setting value of the presence or absence of the external tray of the setting item G is set to "Absence", the setting value of the setting item F is maintained as "Tray 1" by the prohibition process, and a setting failure message is displayed on the operation screen. The setting failure message may be any message. For example, the setting failure message is "The setting failed because there was a prohibition violation. Therefore, the setting value is maintained as Tray 1" or the like.

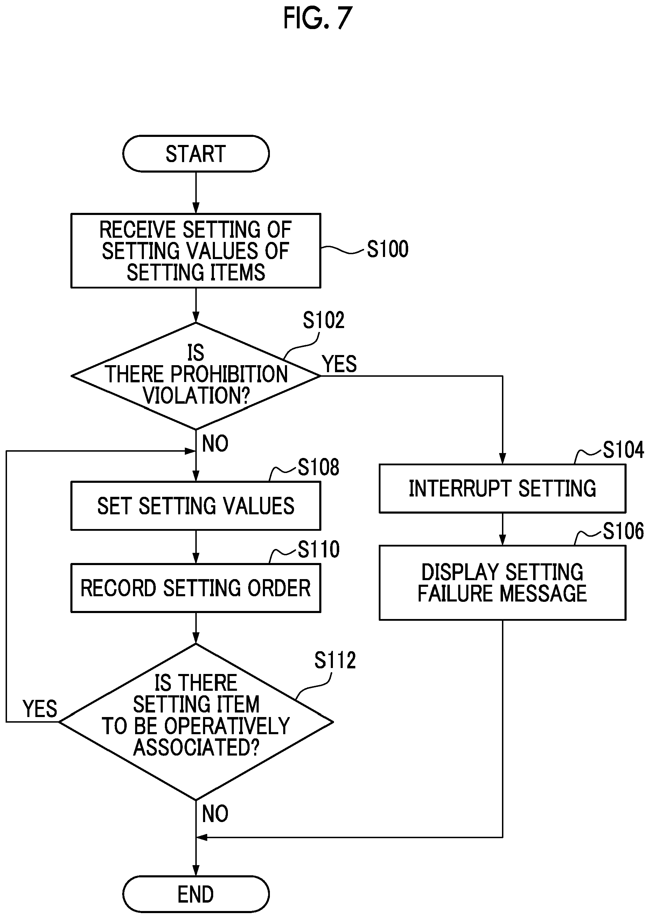

Next, a flow of a process in a case where a history illustrated in Fig. 5 in which the user operated the operation screen to set the setting items is recorded will be described with reference to a flowchart illustrated in Fig. 7. In addition, the CPU 127 (see Fig. 3) of the replication source apparatus 100 reads out the program stored in the ROM 27B or the storage device 21E (see Fig. 2), deploys the program in the RAM 27C (see Fig. 3), and executes the program to perform the process.

As illustrated in Fig. 7, in Step S100, the CPU 127 receives the setting of the setting values of the setting items by the user. In Step S102, the CPU 127 checks whether or not there is a prohibition violation for the received setting of the setting values of the setting items. In a case where there is a prohibition violation (Yes), the process proceeds to Step S 104.

In Step S104, the CPU 127 interrupts the process. In Step S106, the CPU 127 displays the setting failure message on the operation screen and ends the process.

In Step S102, in a case where there is no prohibition violation (No), the process proceeds to Step S108. In Step S108, the CPU 127 sets the setting values of the received setting items. In Step S 110, the CPU 127 records the setting order of the received setting items.

In Step S112, the CPU 127 checks whether or not there is a setting item whose setting value is to be set in operative association with the received setting item. In Step S 112, in a case where there is no setting item to be operatively associated (No), the process ends. In Step S112, in a case where there is a setting item to be operatively associated (Yes), the process returns to Step S108.

Fig. 6 illustrates the setting information generated in a case where the user operates the operation screen to issue an instruction to create the setting file 52 in this state (see Fig. 1). Then, the setting file 52 (see Fig. 1) in which the generated setting information illustrated in Fig. 6 has been recorded is created. The setting file 52 is recorded in the memory card 50.

### [Replication of Setting File]

Next, the replication of the setting values of the setting items by the setting file 52 in the replication destination apparatus 200 will be described.

In addition, the setting items of the replication destination apparatus 200 are identical to the setting items of the replication source apparatus 100, and the initial states and the initial values are identical to the initial states and the initial values illustrated in Fig. 4. Further, the replication destination apparatus 200 has an operative association process and a prohibition process that are identical to the operative association process and the prohibition process of the replication source apparatus 100. That is, in the replication destination apparatus 200, the setting items whose setting values are automatically set in operative association and the setting values are identical to the setting items and the setting values in the replication source apparatus 100. Similarly, the prohibition on the setting items in the replication destination apparatus 200 is identical to the prohibition in the replication source apparatus 100.

The user connects the memory card 50, in which the setting file 52 of the setting information illustrated in Fig. 6 has been recorded, to the replication destination apparatus 200 to read the setting file 52. Specifically, as illustrated in Fig. 1, the user takes out the memory card 50, to which the setting file 52 having the setting information recorded therein has been written, from the replication source apparatus 100 (see an arrow 101), inserts the taken-out memory card 50 into the replication destination apparatus 200 to read the setting file 52, and acquires the setting information to be replicated (arrow 102).

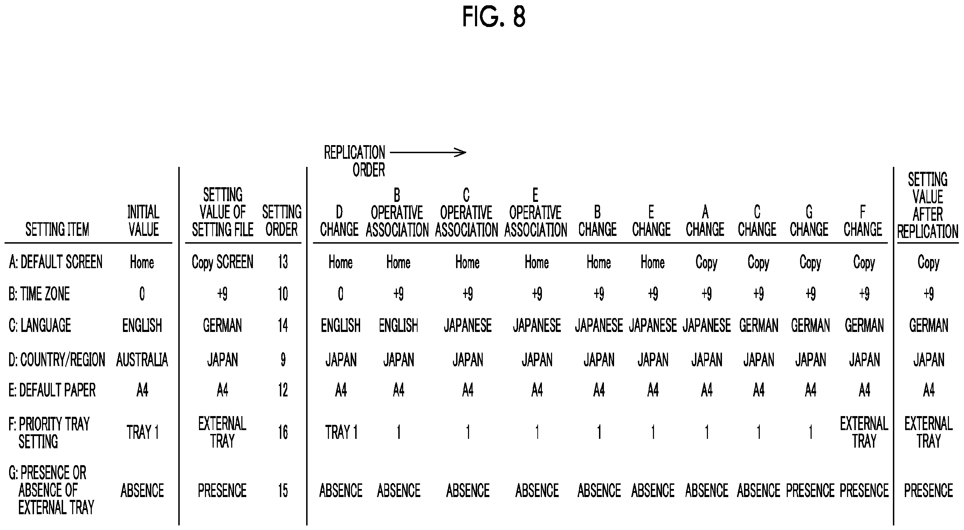

As illustrated in Fig. 8, the replication destination apparatus 200 replicates the setting values in order from the setting item having the lowest setting order. In addition, the setting values of the setting items of the replication destination apparatus 200 are the initial values.

First, since the setting item having the lowest setting order is the setting item D having a setting order of "9", the setting value of the setting item D is set to "Japan". In a case where the setting value of the setting item D is set to "Japan", the setting value of the setting item B is set to "+9", the setting value of the setting item C is set to "Japanese", and the setting value of the setting item E is set to "A4" by the operative association process.

Then, since the setting item having the lower setting order is the setting item B having a setting order of "10", the setting value of the setting item B is set to "+9". Then, since the setting item having the lower setting order is the setting item E having a setting order of "12", the setting value of the setting item E is set to "A4".

Then, since the setting item having the lower setting order is the setting item A having a setting order of " 13", the setting value of the setting item A is set to "Copy". Then, since the setting item having the lower setting order is the setting item C having a setting order of "14", the setting value of the setting item C is set to "German".

Then, since the setting item having the lower setting order is the setting item G having a setting order of "15", the setting value of the setting item G is set to "Presence". Then, since the setting item having the lower setting order is the setting item F having a setting order of " 16", the setting value of the setting item F is set to "External tray".

As described above, the setting values of the setting items in the setting information of the setting file 52 are matched with the replicated setting values of the setting items.

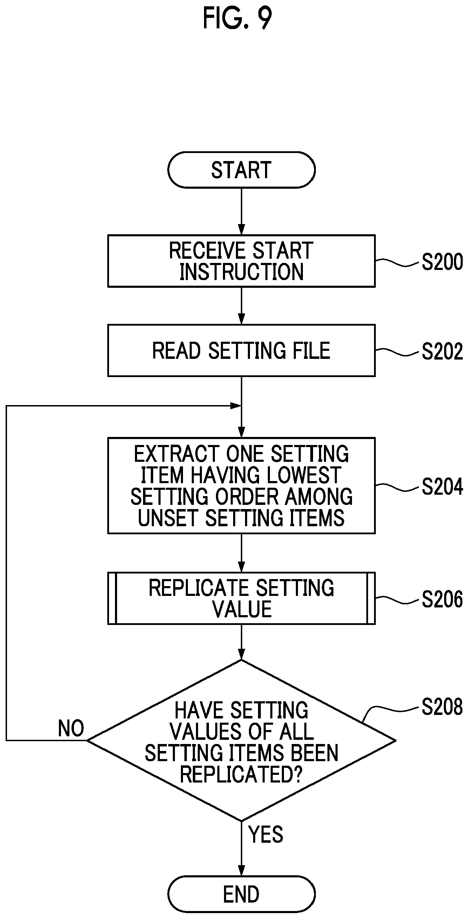

Next, a flow of a process of reading the setting file 52 in which the setting information illustrated in Fig. 8 has been recorded, acquiring the setting information, and replicating the setting information will be described with reference to a flowchart illustrated in Fig. 9. In addition, the CPU 227 (see Fig. 3) of the replication destination apparatus 200 reads out the program stored in the ROM 27B or the storage device 21E (see Fig. 2), deploys the program in the RAM 27C (see Fig. 3), and executes the program to perform the process.

As illustrated in Fig. 9, in Step S200, the CPU 227 receives an instruction to start the replication of the setting values of the setting items from the user. In Step S202, the CPU 227 reads the setting file 52 to acquire the setting information. In Step S204, the CPU 227 extracts one setting item having the lowest setting order among the unset setting items in the current replication process. In Step S206, the CPU 227 replicates the setting value of the extracted setting item.

In Step S208, the CPU 227 checks whether or not all of the setting items have been replicated. In a case where all of the setting items have been replicated (Yes), the process is ended. In a case where all of the setting items have not been replicated (No), the process returns to Step S204.

### [Operation]

Next, the operation of the present exemplary embodiment will be described.

In a case where the setting values of the setting items are set, the replication source apparatus 100 records the setting order. Then, the setting information having the setting values of a plurality of setting items and the setting order in which the setting values of the plurality of setting items are set last is generated by the operation of the user. The setting file 52 in which the setting information has been recorded is created. The setting file 52 is written to the memory card 50.

The replication destination apparatus 200 reads out the setting file 52 from the memory card 50 to acquire the setting information and replicates the setting values in order from the setting item having the lowest setting order.

Therefore, in a case where the setting values are replicated from the replication source apparatus 100 to the replication destination apparatus 200, the replicated setting values are prevented from being unintended setting values.

In addition, in a case where the setting value of one setting item is set, the setting value of another setting item is set in operative association with the setting of the setting value of the one setting item in the replication source apparatus 100 and the replication destination apparatus 200. Specifically, in a case where the country/region of the setting item D is set, the time zone of the setting item B, the language of the setting item C, and the default paper of the setting item E are automatically set in operative association with the setting of the country/region. Therefore, a setting error is reduced as compared to a case where there are no items to be set in operative association with each other.

In addition, in the replication source apparatus 100 and the replication destination apparatus 200, the setting value of one setting item has a prohibition with respect to the setting value of another setting item. Specifically, there is a prohibition in which the setting value of the priority tray setting of the setting item F is not capable of being set to "External tray" unless the setting value of the presence or absence of the external tray of the setting item G is "Presence". Therefore, the setting error is reduced as compared to a case where there is no prohibition.

Here, a comparative example in which the replication destination apparatus 200 sets the setting values of a plurality of setting items in the order, in which the setting values are recorded, to replicate the setting values will be described.

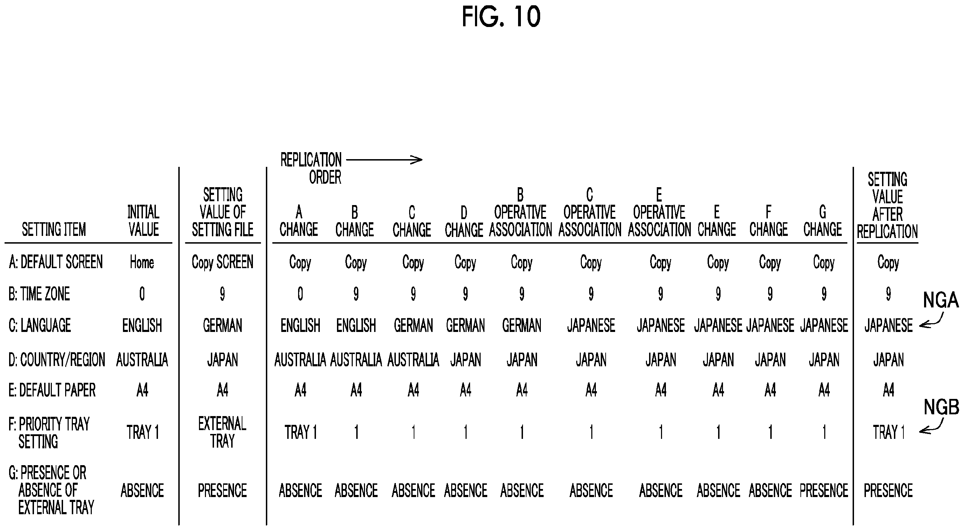

As illustrated in Fig. 10, in the comparative example, the replication destination apparatus 200 replicates the setting values in the order in which the setting items are recorded, that is, in an alphabetical order of the setting items A to G.

In this case, first, the setting value of the setting item A is set to "Copy". Then, the setting value of the setting item B is set to "+9". The setting value of the setting item C is set to "German".

Then, the setting value of the setting item D is set to "Japan". In a case where the setting value of the setting item D is set to "Japan", the setting value of the setting item B is set to "+9", the setting value of the setting item C is set to "Japanese", and the setting value of the setting item E is set to "A4" by the operative association process.

Then, the setting value of the setting item E is set to "A4". Then, the setting value of the setting item F is set to "External tray", but is maintained as "Tray 1" by the prohibition process. Then, the setting value of the setting item G is set to "Presence".

As described above, in the comparative example, among the setting values of the setting items in the setting information of the setting file 52, there is a setting item that is not matched with the replicated setting item in setting value. Specifically, the language of the setting item C of NGA is "German" in the setting information, but the replicated setting item is "Japanese". Therefore, the setting items are not matched with each other. In addition, the priority tray setting of the setting item F of NGB is "External tray" in the setting information, but the replicated setting item is "Tray 1". Therefore, the setting items are not matched with each other.

In contrast, in the present exemplary embodiment, as can be seen from Fig. 8 described above, the setting value of the setting item in the setting information of the setting file 52 is completely matched with the setting value of the replicated setting item.

As described above, the setting values of the setting items in the replication destination apparatus 200 are set in the order of the setting items whose setting values have been actually set in the replication source apparatus 100. Therefore, in the replication destination apparatus 200, the setting items are set to the setting values identical to the setting values in the setting information of the setting file 52 even in a case where there are the operative association process and the prohibition process.

In addition, all of the operation logs are not recorded, but only the last changed order is recorded. Therefore, the number of data items that can be calculated is finite, specifically, the number of data items is equal to the number of setting items. As a result, the amount of data in the setting file 52 is small.

Further, the information of the setting order of the setting items in the setting information is created by the operation history. Therefore, a software developer does not need to examine the order of the setting items whose setting values are to be replicated in consideration of the operative association process and the prohibition process during development.

Here, in a case where there are differences in the firmware version, the installation configuration of the tray, the operative association process, the prohibition process, and the like between the replication source apparatus 100 and the replication destination apparatus 200, it is considered that the setting values in the replication destination apparatus 200 are not completely matched with the setting values in the setting information of the setting file 52.

However, even in a case where the setting values are not completely matched with each other, the frequency of the setting values being unintended setting values ignoring the operative association process and the prohibition process is reduced. In addition, even in a case where the setting value is the unintended setting value, the setting value is a setting value on the safe side. For example, it is assumed that there is a prohibition process in which the setting item that was capable of being validated even in an off state of administrator authentication in the old firmware of the replication source apparatus 100 is not capable of being validated unless the administrator authentication is in an on state in the new firmware of the replication destination apparatus 200 in order to strengthen security. In this case, in the replication destination apparatus 200, the setting value is not completely matched with the setting value in the setting information of the setting file 52 because the prohibition process is not passed, but is a setting value on the safe side as a security risk.

Further, for example, in a case where the setting items of the replication source apparatus 100 are not completely matched with the setting items of the replication destination apparatus 200, that is, in a case where the replication destination apparatus 200 includes a setting item that is not present in the setting items of the replication source apparatus 100, the setting item is skipped and maintained as a default.

Furthermore, in a case where the replication destination apparatus 200 includes a setting item to which the setting value of the setting item of the replication source apparatus 100 is not capable of being set, the setting item is skipped and maintained as a default. For example, the setting value of the language of the setting item C of the replication source apparatus 100 is set to "French". However, in a case where "French" is not present in the setting value of the language of the setting item C of the replication destination apparatus 200, the setting value is maintained as a default.

### <Modification Examples>

Next, modification examples of the present exemplary embodiment will be described.

### [First Modification Example]

In a first modification example, the replication destination apparatus 200 is set not to replicate the setting value of the setting item whose setting order has the initial value, that is, "0" in the setting information of the setting file 52 of the replication source apparatus 100.

It is possible to provide the setting item whose setting value is not replicated in the replication destination apparatus 200.

### [Second Modification Example]

In a second modification example, setting is performed such that the setting order of the setting item, of which the initial value of the setting order is not "0", but is a predetermined value (hereinafter, referred to as a "prescribed value") of, for example, "-1" in the setting information of the replication source apparatus 100 is not recorded. Then, the replication destination apparatus 200 is set not to replicate the setting value of the setting item, of which the initial value of the setting order is the prescribed value, that is, "-1" in the setting information of the setting file 52 of the replication source apparatus 100.

It is possible to provide the setting item whose setting order is not recorded in the replication source apparatus 100. In addition, it is possible to provide the setting item whose setting value is not replicated in the replication destination apparatus 200.

### <Others>

However, the present invention is not limited to the above-described exemplary embodiment.

For example, in the above-described exemplary embodiment, the setting information is recorded in the setting file 52 and is transmitted from the replication source apparatus 100 to the replication destination apparatus 200 via the memory card 50. However, the present invention is not limited thereto. For example, the setting information may be transmitted and received via a recording medium other than the memory card 50. Alternatively, the replication source apparatus 100 and the replication destination apparatus 200 may be connected wirelessly or in a wired manner to directly transmit and receive the setting information.

In addition, for example, in the above-described exemplary embodiment, an example has been described in which the setting value of each setting item of the replication source apparatus 100 is exported and imported to the replication destination apparatus 200 as represented by the arrow 101 and the arrow 102 in Fig. 1. However, the present invention is not limited thereto. As represented by an arrow 103, the setting file 52 may be used as backup data used in a case of restoring the image forming apparatus 100. Further, in this case, the image forming apparatus 100 illustrated in Fig. 1 is both the replication source apparatus and the replication destination apparatus.

In addition, for example, the configurations and the like of the information apparatus system 10 and the image forming apparatuses 100 and 200 described in the above exemplary embodiment are examples and may be changed depending on the situation, or new components may be added without departing from the gist.

Furthermore, for example, in the above-described exemplary embodiment, an information processing apparatus and an information processing system other than the image forming apparatuses 100 and 200 may be used. The information processing apparatus and the information processing system may be any apparatus that, for example, exports, imports, and restores the setting information, and may be, for example, a computer server, a personal computer, a router, a smartphone, a digital home electric appliance, and the like.

Moreover, the flow of the process of the program described in the above exemplary embodiment is an example. Unnecessary steps may be deleted, new steps may be added, or the processing order may be changed without departing from the gist.

In addition, for example, in the above-described exemplary embodiment, the aspect in which the program is stored (installed) in advance in the ROM 27B or the storage device 21E has been described. However, the present invention is not limited thereto. The program may be provided in a form of being recorded on a recording medium such as a compact disk read only memory (CD-ROM), a digital versatile disk read only memory (DVD-ROM), or a universal serial bus (USB) memory. In addition, the program may be downloaded from an external apparatus via a network such as the Internet.

In addition, for example, various processors other than the CPU may execute the process executed by the reading of the program by the CPU 27A in the above-described exemplary embodiment. In this case, examples of the processor include a programmable logic device (PLD), such as a field-programmable gate array (FPGA), whose circuit configuration is capable of being changed after manufacture, and a dedicated electric circuit, such as an application specific integrated circuit (ASIC), which is a processor having a dedicated circuit configuration designed to perform a specific process.

In the embodiments above, the term "processor" is broad enough to encompass one processor or plural processors in collaboration which are located physically apart from each other but may work cooperatively. The order of operations of the processor is not limited to one described in the embodiments above, and may be changed.

In addition, the process may be executed by a combination of two or more processors of the same type or different types (for example, a plurality of FPGAs, a combination of a CPU and an FPGA, and the like). Further, more specifically, the hardware structure of these various processors is an electric circuit obtained by combining circuit elements such as semiconductor elements.

Furthermore, the present invention can be implemented in various ways without departing from the gist of the present invention. A plurality of exemplary embodiments, modification examples, and the like can be combined and implemented as appropriate.

### [Supplementary Notes]

(((1))) An information processing system comprising:
   one or a plurality of processors configured to:
   acquire setting information including a plurality of setting items and a setting order of the plurality of setting items; and
   replicate setting values in order from a setting item having a lowest setting order.
(((2))) The information processing system according to (((1))), wherein the processor is configured not to:
   replicate the setting value of the setting item of which an initial value of the setting order is a predetermined value.
(((3))) The information processing system according to (((1))) or (((2)), wherein the processor is configured to:
   in a case where a setting value of one of the setting items is set, set a setting value of another of the setting items in operative association with the setting of the setting value of the one setting item.
(((4))) The information processing system according to any one of (((1))) to (((3)),
   wherein a setting value of one of the setting items has a prohibition with respect to a setting value of another of the setting items.
(((5))) The information processing system according to any one of (((1))) to (((4))), wherein the processor is configured not to:
   replicate a setting value of the setting item whose setting order has an initial value.
(((6))) An information processing system comprising:
   one or a plurality of processors configured to:
   record a setting order in a case where a setting value of a setting item is set; and
   generate setting information having setting values of a plurality of setting items and a setting order in which the setting values of the plurality of setting items are set last.
(((7))) The information processing system according to (((6))), wherein the processor is configured not to:
   record the setting order of a predetermined setting item even in a case where a setting value of the predetermined setting item is set.
(((8))) The information processing system according to (((6))) or (((7))), wherein the processor is configured to:
   in a case where a setting value of one of the setting items is set, set a setting value of another of the setting items in operative association with the setting of the setting value of the one setting item and record the setting order.
(((9))) The information processing system according to any one of (((6))) to (((8))),
   wherein a setting value of one of the setting items has a prohibition with respect to a setting value of another of the setting items.
(((10))) An information apparatus system that replicates setting values of a plurality of setting items of a replication source apparatus to setting values of a plurality of setting items of a replication destination apparatus,
   wherein a processor of the replication source apparatus is configured to:
   record a setting order in a case where the setting values of the setting items are set; and
   generate setting information having the setting values of the plurality of setting items and a setting order in which the setting values of the plurality of setting items are set last, and
   a processor of the replication destination apparatus is configured to:
      acquire the setting information; and
      replicate the setting values in order from a setting item having a lowest setting order.
(((11))) The information apparatus system according to (((10))), wherein the processor of the replication source apparatus is configured not to:
   record the setting order of the setting item of which an initial value of the setting order is a predetermined value even in a case where the setting value of the setting item is set.
(((12))) The information apparatus system according to (((11))), wherein the processor of the replication destination apparatus is configured not to:
   replicate a setting value of the setting item of which an initial value of the setting order is the predetermined value.
(((13))) The information apparatus system according to any one of (((10))) to (((12))), wherein the processor of the replication source apparatus is configured not to:
   replicate the setting value of the setting item whose setting order has an initial value in the setting information.
(((14))) The information apparatus system according to any one of (((10))) to (((13))), wherein the processor of the replication source apparatus is configured to:
   in a case where a setting value of one of the setting items is set, set a setting value of another of the setting items in operative association with the setting of the setting value of the one setting item and record the setting order.
(((15))) The information apparatus system according to (((14))), wherein the processor of the replication destination apparatus is configured to:
   in a case where the setting value of the one setting item that is identical to a setting value in the replication source apparatus is set, set the setting value of the another setting item that is identical to the setting value in the replication source apparatus in operative association with the setting of the setting value of the one setting item.
(((16))) A program causing a computer to execute a process comprising:
   acquiring setting information including a plurality of setting items and a setting order of the plurality of setting items; and
   replicating setting values in order from a setting item having a lowest setting order.
(((17))) A program causing a computer to execute a process comprising:
   recording a setting order in a case where a setting value of a setting item is set; and
   generating setting information having setting values of a plurality of setting items and the setting order in which the setting values of the plurality of setting items are set last.

According to the information processing system of (((1))), in a case where a setting value is replicated from one side to the other side, it is possible to prevent the replicated setting value from being an unintended setting value.

According to the information processing system of (((2))), it is possible to provide the setting item whose setting value is not replicated.

According to the information processing system of (((3))), a setting error is reduced as compared to a case where there are no items that are set in operative association with each other.

According to the information processing system of (((4))), the setting error is reduced as compared to a case where there is no prohibition.

According to the information processing system of (((5))), it is possible to provide the setting item whose setting value is not replicated.

According to the information processing system of (((6))), in a case where a setting value is replicated from one side to the other side, it is possible to prevent the replicated setting value from being an unintended setting value.

According to the information processing system of (((7))), it is possible to provide the setting item whose setting order is not recorded.

According to the information processing system of (((8))), in a case where the setting values of the setting items are set in operative association with each other, the frequency of the setting values of the setting items being unintended setting values in a case where the setting values of the setting items are replicated is reduced as compared to a case where the setting order is not recorded.

According to the information processing system of (((9))), the setting error is reduced as compared to a case where there is no prohibition.

According to the information apparatus system of (((10))), in a case where a setting value is replicated from one side to the other side, it is possible to prevent the replicated setting value from being an unintended setting value.

According to the information apparatus system of (((11))), it is possible to provide the setting item whose setting value is not recorded.

According to the information apparatus system of (((12))), it is possible to provide the setting item whose setting value is not replicated.

According to the information apparatus system of (((13))), it is possible to provide the setting item whose setting value is not replicated.

According to the information apparatus system of (((14))), in a case where the setting values of the setting items are set in operative association with each other, the frequency of the setting values of the setting items being unintended setting values in a case where the setting values of the setting items are replicated is reduced as compared to a case where the setting order is not recorded.

According to the information apparatus system of (((15))), the frequency of the setting values of the setting items being unintended setting values is reduced as compared to a case where the setting item to be operatively associated is not matched with the setting item in the replication source apparatus.

According to the program of (((16))), in a case where a setting value is replicated from one side to the other side, it is possible to prevent the replicated setting value from being an unintended setting value.

According to the program of (((17))), in a case where a setting value is replicated from one side to the other side, it is possible to prevent the replicated setting value from being an unintended setting value.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: information apparatus system
52: setting file
100: image forming apparatus (example of replication source apparatus, information processing apparatus, and information processing system)
127: CPU (example of processor of replication source apparatus)
200: image forming apparatus (example of replication destination apparatus, information processing apparatus, and information processing system)
227: CPU (example of processor of replication destination apparatus)

## Claims

1. An information processing system comprising:
one or a plurality of processors configured to:
acquire setting information including a plurality of setting items and a setting order of the plurality of setting items; and
replicate setting values in order from a setting item having a lowest setting order.

2. The information processing system according to claim 1, wherein the processor is configured not to:
replicate the setting value of the setting item of which an initial value of the setting order is a predetermined value.

3. The information processing system according to claim 1 or 2, wherein the processor is configured to:
in a case where a setting value of one of the setting items is set, set a setting value of another of the setting items in operative association with the setting of the setting value of the one setting item.

4. The information processing system according to any one of claims 1 to 3,
wherein a setting value of one of the setting items has a prohibition with respect to a setting value of another of the setting items.

5. The information processing system according to any one of claims 1 to 4, wherein the processor is configured not to:
replicate a setting value of the setting item whose setting order has an initial value.

6. An information processing system comprising:
one or a plurality of processors configured to:
record a setting order in a case where a setting value of a setting item is set; and
generate setting information having setting values of a plurality of setting items and a setting order in which the setting values of the plurality of setting items are set last.

7. The information processing system according to claim 6, wherein the processor is configured not to:
record the setting order of a predetermined setting item even in a case where a setting value of the predetermined setting item is set.

8. The information processing system according to claim 6 or 7, wherein the processor is configured to:
in a case where a setting value of one of the setting items is set, set a setting value of another of the setting items in operative association with the setting of the setting value of the one setting item and record the setting order.

9. The information processing system according to any one of claims 6 to 8,
wherein a setting value of one of the setting items has a prohibition with respect to a setting value of another of the setting items.

10. An information apparatus system that replicates setting values of a plurality of setting items of a replication source apparatus to setting values of a plurality of setting items of a replication destination apparatus,
wherein a processor of the replication source apparatus is configured to:
record a setting order in a case where the setting values of the setting items are set; and generate setting information having the setting values of the plurality of setting items and a setting order in which the setting values of the plurality of setting items are set last, and
a processor of the replication destination apparatus is configured to:
acquire the setting information; and
replicate the setting values in order from a setting item having a lowest setting order.

11. The information apparatus system according to claim 10, wherein the processor of the replication source apparatus is configured not to:
record the setting order of the setting item of which an initial value of the setting order is a predetermined value even in a case where the setting value of the setting item is set.

12. The information apparatus system according to claim 11, wherein the processor of the replication destination apparatus is configured not to:
replicate a setting value of the setting item of which an initial value of the setting order is the predetermined value.

13. The information apparatus system according to any one of claims 10 to 12, wherein the processor of the replication source apparatus is configured not to:
replicate the setting value of the setting item whose setting order has an initial value in the setting information.

14. The information apparatus system according to any one of claims 10 to 13, wherein the processor of the replication source apparatus is configured to:
in a case where a setting value of one of the setting items is set, set a setting value of another of the setting items in operative association with the setting of the setting value of the one setting item and record the setting order.

15. The information apparatus system according to claim 14, wherein the processor of the replication destination apparatus is configured to:
in a case where the setting value of the one setting item that is identical to a setting value in the replication source apparatus is set, set the setting value of the another setting item that is identical to the setting value in the replication source apparatus in operative association with the setting of the setting value of the one setting item.
